# EUROPEAN PATENT APPLICATION

(11) **EP 4 050 515 A1**
(43) Date of publication of application: **31.08.2022**
(21) Application number: 22158031.9
(22) Date of filing: 22.02.2022
(51) Int. Cl.: G06K 9/62, G06T 11/60, G06N 3/04, G06N 3/08

(54) **INTEGRATED PIPELINE FOR GENERATION OF VIRTUAL MODELS FOR APPAREL CATALOGUE AND VIRTUAL TRY-ONS FOR APPARELS**

(30) Priority: 24.02.2021 IN 202121007827
(71) Applicant: Tata Consultancy Services Limited, Maharashtra (IN)
(72) Inventor: Mandhana, Mahesh Nandkishore, Pune, Maharashtra 411057 (IN)
(74) Representative: Goddar, Heinz J.

(57) **Abstract**

Works in literature specifically focusses on virtual try-ons. However, generating automatic model catalogue requires variations in clothing, ethnicity etc. Embodiments of the present disclosure provide a method and system for integrated pipeline for generation of virtual models for apparel catalogue and virtual try-ons for apparels. The method disclosed enables variations in poses, ethnicity, faces using special trainings and loss functions for Machine Learning model pipeline stages to introduce the change in pose and other parameters like face, hair etc. with stability and consistency These variations enable generating the model catalogue along with virtual try-on model functionality, providing cost and time efficient solution to end users for catalogue generation with synthetically generated new faces.

## Description

### CROSS-REFERENCE TO RELATED APPLICATIONS AND PRIORITY

The present application claims priority from Indian Application No. 202121007827, filed on 24 February 2021.

### TECHNICAL FIELD

The embodiments herein generally relate to visual Artificial Intelligence (AI) in fashion retail industry and, more particularly, to a method and system for integrated pipeline for generation of virtual models for apparel catalogue and virtual try-ons for apparels.

### BACKGROUND

Visual Artificial Intelligence (AI) in fashion retail industry has penetrated the virtual try-on applications for online stores and the like. Generating virtual try-on looks or virtual models for apparel catalogue with different clothing items in varying poses can provide a time efficient, cost efficient solution and enhance the user experience of a retailer, a garment manufacturer, and the like. Current machine learning approaches seem to focus only on the try-on model generation. Further, these conventional machine learning approaches, also referred as Artificial Intelligence (AI) pipeline, have limitations when poses of try-on models are with occlusions. Thus, in conventional methods the capacity of AI or ML is limited and not completely explored.

### SUMMARY

Embodiments of the present disclosure present technological improvements as solutions to one or more of the above-mentioned technical problems recognized by the inventors in conventional systems.

For example, in one embodiment, a method for integrated pipeline for generation of virtual models for apparel catalogue and virtual try-ons for apparels is provided. The method includes receiving a source image of a subject and learning via a Machine Learning (ML) model, a subject representation from the source image, wherein the subject representation comprising 1) a source pose map comprising a plurality of pose key points of the subject and 2) a partial human parse comprising minimal image segments from among a plurality of image segments that provide information about skin color, bottom body parts, face, and hair of the subject.

The method further comprises learning a target semantic image, via a first Generative Adversarial Networks (GAN) based model, using i) the partial human parse, ii) a target clothing item dynamically selected from among a plurality of clothing images and iii) a pose map dynamically selected from a) a source pose map or b) a target pose map from among a plurality of target pose maps available in a catalog dataset. The learnt target sematic image represents the target clothing item aligned to the partial source human parse with a pose defined by the dynamically selected pose map. The flexibility to dynamically select the pose map during learning of the target semantic image enables creating variations in a pose of the target semantic image. The wherein the first GAN model is trained using adversarial loss function combined with a Focal Tversky loss function, wherein the Focal Tversky loss function optimizes learning of the selected pose map having odd and complex poses with occlusions for which ground truth dataset is limited.

Furthermore, the method comprises warping the target clothing item to body fit the target semantic image using the subject representation and the selected pose map, using a Geometric matching module (GMM) and a spatial Transformation network.

Furthermore, the method comprises generating a final target image using the partial human parse, the target sematic image and the warped clothing item, wherein the final target image represents a virtual try-on image for the subject, and depicts pose variation in accordance with the target pose map selected during target sematic image generation. The final target image is generated by a second GAN based model, which is trained using a multi-scale version of Structural Similarity Index (MS-SSIM) loss function, a L1 loss function, a style loss, a content loss, and an adversarial loss function.

Furthermore, the method comprises changing face and hair of the final target image using a face and hair pair combination selected from face and hair variations available in the catalogue dataset, via a third GAN based model, to create a plurality of virtual models for the apparel catalogue, comprising a plurality of final target images having the pose variations derived from the plurality of target poses, clothing variations obtained from the plurality of clothing images, and ethnicity variations obtained from the face and hair variations.

In another aspect, a system for integrated pipeline for generation of virtual models for apparel catalogue and virtual try-ons for apparels is provided. The system comprises a memory storing instructions; one or more Input/Output (I/O) interfaces; and one or more hardware processors coupled to the memory via the one or more I/O interfaces, wherein the one or more hardware processors are configured by the instructions to: receive a source image of a subject and learning via a Machine Learning (ML) model, a subject representation from the source image, wherein the subject representation comprising 1) a source pose map comprising a plurality of pose key points of the subject and 2) a partial human parse comprising minimal image segments from among the plurality of image segments that provide information about skin color, bottom body parts, face, and hair of the subject.

The system is configured to learn a target semantic image, via a first Generative Adversarial Networks (GAN) based model, using i) the partial human parse, ii) a target clothing item dynamically selected from among a plurality of clothing images and iii) a pose map dynamically selected from a) a source pose map or b) a target pose map from among a plurality of target pose maps available in a catalog dataset. The learnt target sematic image represents the target clothing item aligned to the partial source human parse with a pose defined by the dynamically selected pose map. The flexibility to dynamically select the pose map during learning of the target semantic image enables creating variations in a pose of the target semantic image. The wherein the first GAN model is trained using adversarial loss function combined with a Focal Tversky loss function, wherein the Focal Tversky loss function optimizes learning of the selected pose map having odd and complex poses with occlusions for which ground truth dataset is limited.

Furthermore, the system is configured to warp the target clothing item to body fit the target semantic image using the subject representation and the selected pose map, using a Geometric matching module (GMM) and a spatial Transformation network.

Furthermore, the system is configured to generate a final target image using the partial human parse, the target sematic image and the warped clothing item, wherein the final target image represents a virtual try-on image for the subject, and depicts pose variation in accordance with the target pose map selected during target sematic image generation. The final target image is generated by a second GAN based model, which is trained using a multi-scale version of Structural Similarity Index (MS-SSIM) loss function, a L1 loss function, a style loss, a content loss, and an adversarial loss function.

Furthermore, the system is configured to change face and hair of the final target image using a face and hair pair combination selected from face and hair variations available in the catalogue dataset, via a third GAN based model, to create a plurality of virtual models for the apparel catalogue, comprising a plurality of final target images having the pose variations derived from the plurality of target poses, clothing variations obtained from the plurality of clothing images, and ethnicity variations obtained from the face and hair variations.

In yet another aspect, there are provided one or more non-transitory machine-readable information storage mediums comprising one or more instructions, which when executed by one or more hardware processors causes a method for integrated pipeline for generation of virtual models for apparel catalogue and virtual try-ons for apparels is provided. The method includes receiving a source image of a subject and learning via a Machine Learning (ML) model, a subject representation from the source image, wherein the subject representation comprising 1) a source pose map comprising a plurality of pose key points of the subject and 2) a partial human parse comprising minimal image segments from among the plurality of image segments that provide information about skin color, bottom body parts, face, and hair of the subject.

The method further comprises learning a target semantic image, via a first Generative Adversarial Networks (GAN) based model, using i) the partial human parse, ii) a target clothing item dynamically selected from among a plurality of clothing images and iii) a pose map dynamically selected from a) a source pose map or b) a target pose map from among a plurality of target pose maps available in a catalog dataset. The learnt target sematic image represents the target clothing item aligned to the partial source human parse with a pose defined by the dynamically selected pose map. The flexibility to dynamically select the pose map during learning of the target semantic image enables creating variations in a pose of the target semantic image. The wherein the first GAN model is trained using adversarial loss function combined with a Focal Tversky loss function, wherein the Focal Tversky loss function optimizes learning of the selected pose map having odd and complex poses with occlusions for which ground truth dataset is limited.

Furthermore, the method comprises warping the target clothing item to body fit the target semantic image using the subject representation and the selected pose map, using a Geometric matching module (GMM) and a spatial Transformation network.

Furthermore, the method comprises generating a final target image using the partial human parse, the target sematic image and the warped clothing item, wherein the final target image represents a virtual try-on image for the subject, and depicts pose variation in accordance with the target pose map selected during target sematic image generation. The final target image is generated by a second GAN based model, which is trained using a multi-scale version of Structural Similarity Index (MS-SSIM) loss function, a L1 loss function, a style loss, a content loss, and an adversarial loss function.

Furthermore, the method comprises changing face and hair of the final target image using a face and hair pair combination selected from face and hair variations available in the catalogue dataset, via a third GAN based model, to create a plurality of virtual models for the apparel catalogue, comprising a plurality of final target images having the pose variations derived from the plurality of target poses, clothing variations obtained from the plurality of clothing images, and ethnicity variations obtained from the face and hair variations.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a functional block diagram of a system, for integrated pipeline for generation of virtual models for apparel catalogue and virtual try-ons for apparels, in accordance with some embodiments of the present disclosure.
FIGS. 2A and 2B (collectively referred as FIG. 2) is a flow diagram illustrating a method for integrated pipeline for generation of virtual models for apparel catalogue and virtual try-ons for apparels, using the system of FIG. 1, in accordance with some embodiments of the present disclosure.
FIGS. 3A through 3D (collectively referred as FIG. 3)depict an example for step by step processing of the input image to generate the virtual try-on image, using the system of FIG. 1 and in accordance with some embodiments of the present disclosure.
FIG. 4A and 4F (collectively referred as FIG. 4) depicts example input images and generated corresponding output virtual try-on images for apparels, using the system of FIG. 1 and in accordance with some embodiments of the present disclosure.
FIG. 5A, 5B and 5C (collectively referred as FIG. 5) depicts examples of input images and generated corresponding output images of virtual models for apparel catalogue generation, using the system of FIG. 1 and in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Visual Artificial Intelligence (AI) is a well-researched field in fashion retail industry. Source images having complex poses with occlusions are challenging while generating try-on images wearing a target clothing item. Current AI based solutions in the art such as' A VITON-GAN: Virtual Try-on Image Generator Trained with Adversarial Loss, Shion Honda et.al', and VITON: An Image-based Virtual Try-on Network Xintong Han et.al. Davisor attempt to address the issue of occlusions in the source image and generate a target image or model wearing the clothing of interest. However, the work in the literature has limitations and does not address the pose variation or change of face feature functionality in face features. Thus, the work above can only perform clothes swaps but cannot change ethnicity of the model, hairs, face etc. Thus, cannot provide a solution for automated AI based virtual model generator. However, such automated virtual model generator if available can enable automated apparel catalogue generator, wherein an end user such as a retailer or fashion designer can try his/ her clothing line or creations on virtual models, with pose, ethnicity, face, and hair variations. This would provide a time and cost efficient solution to the conventional photoshoot sessions for the apparel catalogue generation.

Further, apparel warping process used during the clothing item swapping utilizes the conventional Geometric Matching Module (GMM), wherein the existing solution seems to be more of performing directly superimposing of the clothing item on the generated target figure. There seems to be image manipulation using this logic, where it is stated that "The final virtual try-on output of VITON ^I is a composition of c ' and I' : ^I = α ⊙ c ' + (1 - α) ⊙ I', (2) where ⊙ represents element-wise matrix multiplication". It can be understood by an ordinary person skilled in the art that such a solution relies on image manipulation in the last step of pipeline thus having limitations in terms of accuracy of fitment of the apparel to the body and pose under various conditions.

Embodiments of the present disclosure provide a method and system for integrated pipeline for generation of virtual models for apparel catalogue and virtual try-ons for apparels. The method disclosed enables variations in clothing item, poses, ethnicity, faces using unique Artificial Intelligence (AI) pipeline stages and training datasets to bring the change in pose and other parameters like face, hair, ethnicity etc. The variations enable generating multiple target images for apparel catalogue along with virtual try-on model functionality. A unique Machine Learning (ML) model pipeline disclosed herein, facilitates generating more realistic virtual try-on images and multiple images with variations creating virtual models for the apparel catalogue generation. Thus, unlike conventional costly time consuming photoshoots for the apparel catalogue generation. The variations enable synthetic creation of entirely new faces for the model along with ethnicity, face, hair and pose variations. Unlike adversarial loss function used by conventional GAN models for visual AI applications, the method disclosed introduces Focal Tversky loss function (known in the art) and a multi-scale version of Structural Similarity Index (MS-SSIM) loss function (known in the art) for training Generative Adversarial Networks (GAN) based models of the ML model pipeline,. The Focal Tversky loss function optimizes learning of a selected pose map having odd and complex poses with occlusions for which ground truth dataset is limited. The MS-SSIM loss function weighs a SSIM computed at different scales according to sensitivity of a Human Virtual System(HVS) capturing effect of image-to-observer distance in final target images, thus providing more realistic output images, enhancing the end user experience. Addition of the MS-SSIM loss function to the GAN based model further enables enhanced learning of color and texture of any target clothing item, without resorting to mere overlapping of wrapped clothing image on to Target image by image manipulation

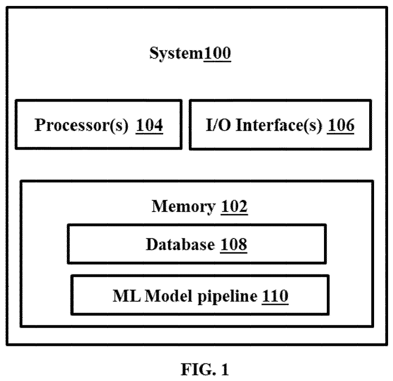

Referring now to the drawings, and more particularly to FIGS. 1 through 5, where similar reference characters denote corresponding features consistently throughout the figures, there are shown preferred embodiments and these embodiments are described in the context of the following exemplary system and/or method.

FIG. 1 is a functional block diagram of a system 100 for integrated pipeline for generation of virtual models for apparel catalogue and virtual try-ons for apparels, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface to display the generated target images and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices for receiving the source images and share generated target images to an external device or server that maintains the model catalogue. In an embodiment, the system 100 may utilize the cloud servers for computationally intensive processing or implementing the ML model pipeline or training the ML model pipeline.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

Further, the memory 102 may include a Machine Learning (ML) model pipeline 110 comprising a ML model, a first GAN model, a Geometric matching module (GMM) and a spatial Transformation network, a second GAN model and a third GAN model (not shown in the figures). Further, memory includes a database 108 that stores the received one or more source images, the final output images such as one or more target images of either the virtual try-ons or the virtual models for the apparel catalogue that generated by the system 100. Also, intermediate data generated by the system such as subject representation derived from the source images, target semantic images, and so on may be stored in the database 108. Further, a catalogue dataset that may comprise a plurality of reference models, reference target poses, reference face and hair variations pairs used for generating the virtual models for apparel catalogue generation, a plurality of target clothing images and so on are stored in the database 108. The catalogue dataset serves as a repository to the system 100.

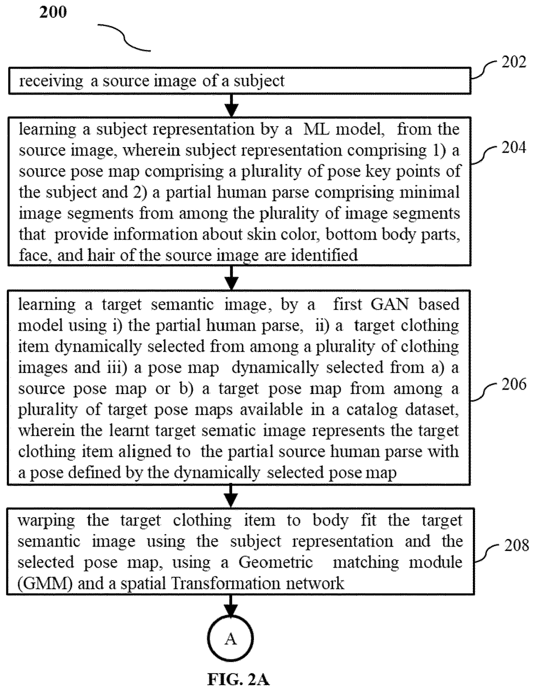

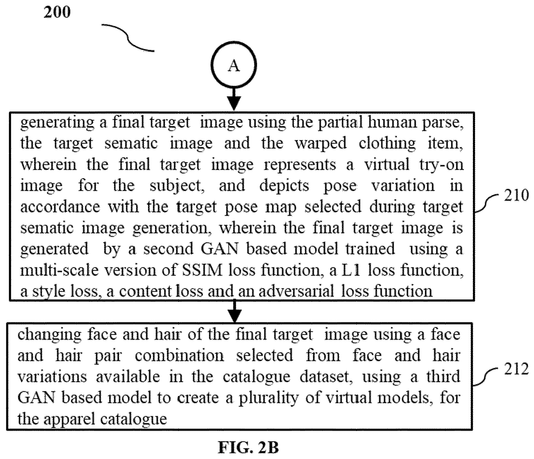

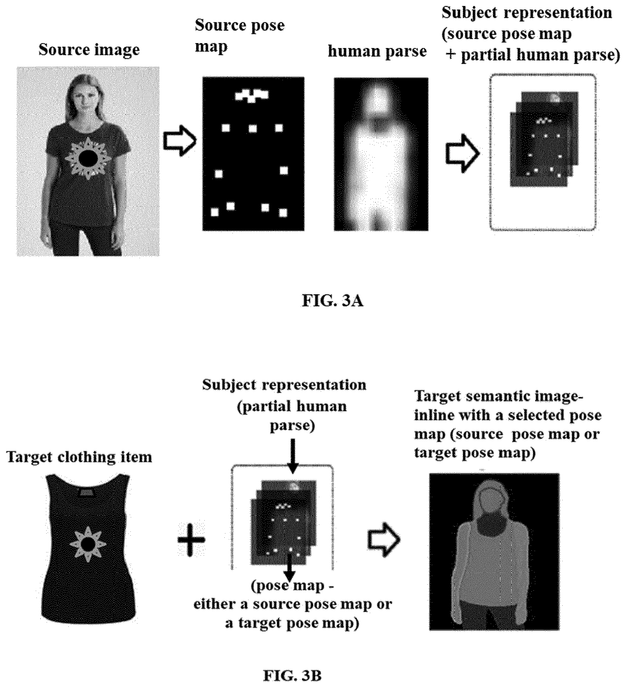

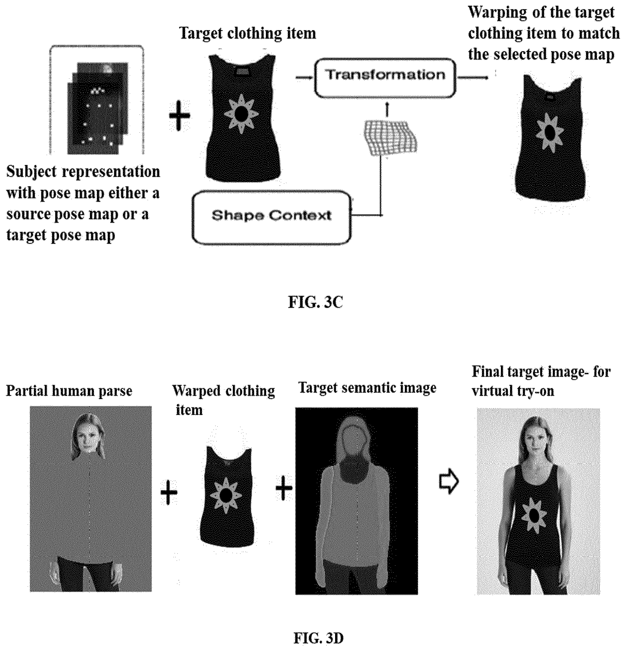

The memory 102 may comprise information pertaining to input(s)/output(s) of each step performed by the processor(s) 104 of the system 100 and methods of the present disclosure. In an embodiment, the database 108 may be external (not shown) to the system 100 and coupled to the system via the I/O interface 106. Functions of the components of the system 100 are explained in conjunction with flow diagram of FIG. 2 and examples depicted in FIGS. 3 through 5.

FIGS. 2A and 2B (collectively referred as FIG. 2) is a flow diagram illustrating a method 200 for integrated pipeline for generation of the virtual models for apparel catalogue and virtual try-ons for apparels, using the system of FIG. 1, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously. The method steps are further explained with examples as depicted in FIGS. 3 through 5.

Referring to the steps of the method 200, at step 202 of the method 200, the one or more hardware processors 104 receive a source image of a subject. In an embodiment the received source image may be an image of an end user (alternately referred to as "user") interested in trying one or more clothing items made available by a retailer, a garment manufacturer, or the like. In another embodiment, when the user intends to generate the apparel catalogue, the source image may be a base image, interchangeably referred to as a reference image, which is automatically selected by the system 100 from images of reference models available in the catalogue dataset. The received source image is processed via the unique ML model pipeline 110 of the method 200 to generate the virtual try-ons or the virtual models for the apparel catalogue.

At step 204, the ML model executed by the one or more hardware processors 104 learns the subject representation from the source image. The subject representation comprises 1) a source pose map comprising a plurality of pose key points of the subject and 2) a partial human parse comprising minimal image segments from among the plurality of image segments that provide information about skin color, bottom body parts, face, and hair of the subject. As known in the art, the human parse refers to segments of the human image that distinctly identify body parts such as a legs, hands, hair, neck, clothing line and the like in accordance with the subject image that is analyzed. The human parse used in training of conventional virtual try-on systems, utilizes large number of segments such. Thus,. ML based systems when trained with conventional human parses introduce bias in the GAN models. The partial human parse comprising minimal segments, which is disclosed herein, addresses the bias issue, and enables optimal learning of GAN models. The significance of using the partial human parse with minimal segments in addressing the bias problem is explained in conjunction with step 206 of the method 200. FIG. 3A depicts the source image, corresponding source map, the plurality of image segments corresponding to the partial human parse and the generated subject representation for the subject in the source image.

Once the subject representation is generated, at step 206 of the method 200, the one or more hardware processors 104 learn a target semantic image, via the first Generative Adversarial Networks (GAN) based model executed by the one or more hardware processors 104. The target sematic image is learnt using i) the partial human parse, ii) the target clothing item dynamically selected from among the plurality of target clothing images in the catalogue dataset and iii) a pose map dynamically selected from a) the source pose map or b) a target pose map from among a plurality of target pose maps available in a catalog dataset. Thus, the learnt target sematic image represents the target clothing item aligned to the partial source human parse with a pose defined by the dynamically selected pose map. Generation of the target sematic image using the target clothing item and the subject representation (with either the source pose map or the target pose map) is depicted in FIG. 3B.

Since the apparels have various types like necks with collar, high neck, deep Neck, long sleeve, short sleeve and many more there, the method disclosed forces the GAN model to learn with constraints, wherein learning is performed using minimal or limited information derived from the source image. Unlike the existing methods that utilize maximum segments from the human parse, such as complete uncovered body parts (full hand with arms, complete neck etc., full legs etc.) along with segments such as face, hair, the method disclosed utilizes only face, hairs, palms, finger, and bottom wear from the human parse, referred to as partial human parse, for training or learning. Thus, the learning with training approach as disclosed herein by utilizing the partial human parse, enables the system 100 to learn to generate the missing information like neck, trunk, shoulders, hands, and further enables the system 100 (the first GAN based model) to align the clothing more accurately while generating the target semantic image. The training approach used using the partial human parse, enabling the system to learn better, eliminates the inherent difference in source image of the person with different kinds of clothing items such as with sleeves, without sleeves, open neck, closed neck and the like. The variations in the input source image. The first GAN based model, which learns the unique way referred herein, is capable of providing consistent input (target semantic image) to the further models in the ML model pipeline 110, irrespective of the variations in the source image. This reduces bias in the ML model pipeline 110. Also, the skin color generation is more aligned to source image as whole hand that is generated has color consistent with palm and fingers (provided in input). Also, color of neck generated is more consistent with face. Thus, a more consistent target semantic image enables a more accurate final target image generation (such as the virtual try-on images or the virtual models)

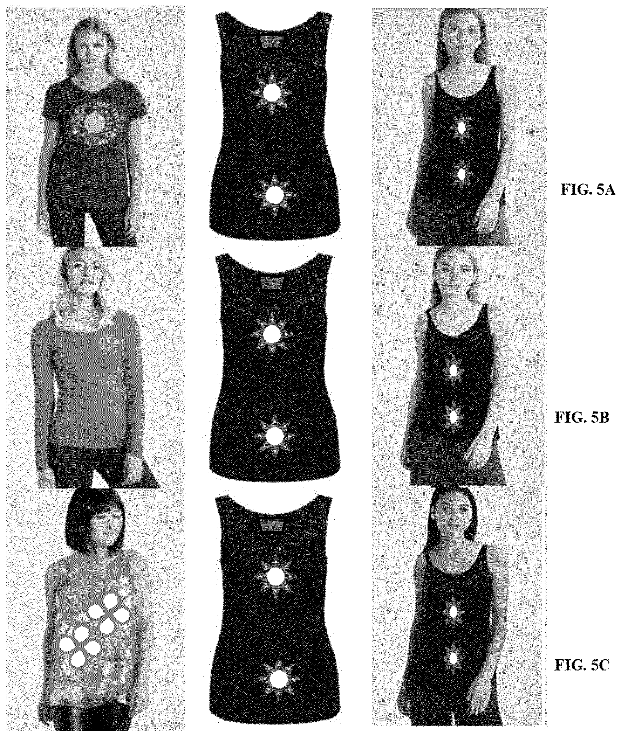

Further, unlike existing methods that totally rely on the source pose map, the method 200 enables introducing variations to the source pose by enabling selection of the target pose map instead of the source pose map as required. The target pose maps providing variation in poses may be derived from a plurality of target pose maps in the catalogue dataset. The pose map variation capability enables virtual model generation to reflect various poses of interest in final output images along with the variations in the target clothing item. The virtual try-on model generation is further explained in conjunction with step 212 and FIG. 5A and 5B.

The method 200 enables the system to operate in two modes, a) the virtual try-on mode and b) the virtual model generation mode for apparel catalogue generation. The training dataset for each mode is distinct as the expected output for each mode has typical differences, in consideration to user interest. For example, in virtual try-on mode user desires his/her virtual look to be as realistic as possible. Thus, the system 100 is expected to provide virtual try-ons (clothes swapping) without any changes to the original face features or body shape of the user. Thus, the capability of the system 100 to vary the pose in accordance with the selected target pose, when in virtual model generation mode, is not an intended feature in virtual try-on mode and hence the methods trains the ML model pipeline 110 accordingly, with distinct datasets.

**Training Dataset:** Two different kind of datasets are used for training of the ML model pipeline 110 for virtual try-on and virtual model generation mode. Two different sets of checkpoints are maintained. To use the system 100 for virtual try-on, training is performed by using the dataset which consists of 2 sets of images 1) model wearing target apparel and 2) a Target apparel image. For getting pose information open source library like openpose is used. For getting human parse information Part Grouping Network (PGN) library is used. To use the system for virtual model Generation for Catalogue, training is performed by using the dataset which consist of 1) sets of images of model wearing target apparel in various poses and 2) the target apparel images. For the pose information open source library like openpose is used. For getting human parse information Part Grouping Network (PGN) is used.

Unlike existing methods that train GAN based models using adversarial loss function for generating target semantic images, the method additionally uses the Focal Tversky loss function for training the first GAN based model. The Focal Tversky loss function optimizes learning of the selected pose map having odd and complex poses with occlusions for which ground truth dataset is limited. It can be understood by person ordinary skilled in the art that scarcity of ground truth data is a practical problem, cause every small variation in pose can create a new distinct pose. Thus, practically it is challenging to have a training dataset that can have all such minor but distinct variations. However, the target sematic image is expected to capture all occlusions as accurate as possible to effectively generate accurate final images. This is achieved by introducing the Focal Tversky loss function as disclosed herein. Focal loss is a variation of Binary Cross-Entropy (BCE). It down-weights the contribution of easy examples and enables the model to focus more on learning hard examples. Focal Loss proposes to down-weigh easy examples and focus training on hard negatives using a modulating factor. Focal Tversky loss in addition attempts to learn hard-examples such as with small ROIs (region of interest) with the help of y coefficient.

At step 208 of the method 200, the one or more hardware processors 104 warp, via the Geometric matching module (GMM) and the spatial Transformation network implemented by the one or more hardware processors 104, the target clothing item selected from the plurality of target clothing images, to body fit the target semantic image as depicted in FIG. 3C. Warping enables finer texture transfer such as capturing changes in texture introduces due to a specific pose map.

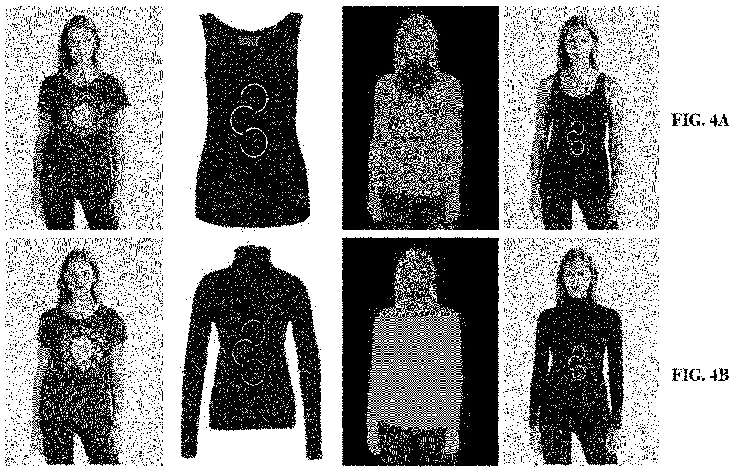

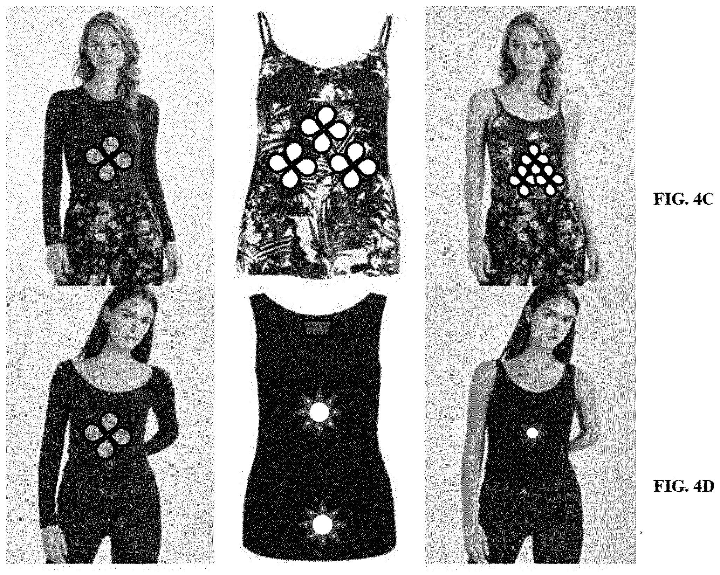

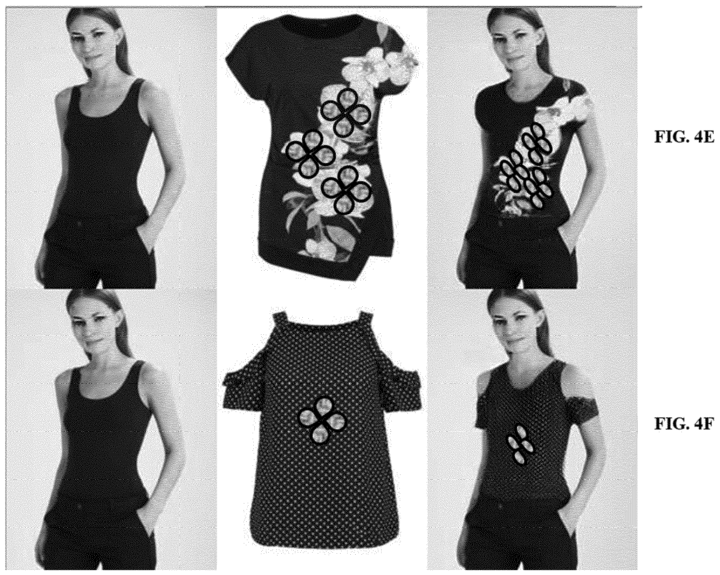

At step 210 of the method 200, the one or more hardware processors 104 generate, via the second GAN based model implemented by the one or more hardware processors 104, a final target image from the target sematic image wearing the warped clothing item as depicted in FIG. 3D. Further, additional virtual-try-on images generated by the system 100 for example source images are depicted in FIG. 4A through 4F (FIG. 4).

FIG. 4A depicts transition of the source image from V neck to deep neck and half sleeve to sleeveless and FIG. 4B depicts transition from V neck to high neck and half sleeve to full sleeve. The method disclosed enables to achieve stable and consistent transitions because of following reasons:
a) The first GAN based model better learning of Target Human semantic image generation as explained in fig 3b. This improvement is brought in by use of Focal Tversky loss functions along with adversarial loss.
b) Only limited information from source image is passed like Face, Hair, Bottom wear and palms whereby the first GAN based model has learned very well to create missing parts of human body.

FIG. 4C depicts transition from full sleeve wear to deep neck slip with rich texture and FIG. 4D depicts transition from full sleeve to deep neck sleeveless t-shirt with awkward/difficult hand position. Both this transitions are stable and consistent because of following reasons. The method disclosed enables to achieve stable and consistent transitions because of following reasons:
a) The first GAN based model, achieves better learning of Target Human semantic image generation as explained in fig 3b. This improvement is brought in by use of Focal Tversky loss functions along with adversarial loss.
b) The second GAN based model achieves better learning for representing rich texture and color in FIG. 3D by using MS-SSIM loss function without resorting to image manipulation without actual overlapping of wrapped clothing image on to final target image.

FIGS. 4E and 4F depict target images generated by the system 100 for clothing items (types of apparels) for which ground truth image data was very less, such cold shoulder t-shirts. As can be seen, the final target image for such clothing items is also very well learnt by the system and providing a realistic output.

The target image represents virtual try-on image for the subject and the final pose is in accordance with the source pose map if the system 100 is in virtual try-on mode. However, if in virtual model generation mode, the system 100 generates pose variation in accordance with the target pose map. The second GAN based model is trained using a multi-scale version of Structural Similarity Index (MS-SSIM) loss function, a L1 loss function, a style loss, a content loss, and an adversarial loss function. The MS-SSIM loss function weighs a SSIM computed at different scales according to sensitivity of a Human Virtual System(HVS) capturing, in the target image, effect of image-to-observer distance.

The generated final target image is the final step, if the system 100 is in the virtual try-on mode, and the steps for generating a next try-on look are repeated for every new target clothing item selected. However, when system100 is in virtual model generation mode, then at step 212 of the method 200, the one or more hardware processors 104 change face and hair of the target image using a face and hair pair combination selected from face and hair variations in the model database, via the third GAN based model, to create the model catalogue comprising the plurality target images having pose variations derived from the plurality of target poses, clothing variations obtained from the plurality of target clothing images, and ethnicity variations obtained from the face and hair variations. using the L1 loss function, the style loss, the content loss, and the adversarial loss function. This is depicted in FIG. 5A through 5C (FIG. 5).

FIGS. 5A, 5B and 5C are all having different pose, face and hair type as compared to the corresponding source image. All final target images depicted in FIG. 5 are generated with similar target pose but face and hair vary based on source image variations. Similarly, as many virtual models (Target Model images)can be created based with face, color and hair features/ ethnicity derived from source with any target pose provided as input.

Further, the manner in which training is performed by the method disclosed varies as compared to conventional ML model trainings. The method focusses on optimizing parameters during the training process of the ML model pipeline 110, wherein combined backward propagation is performed across all steps except the GMM. It means each step is first trained independently with its own input output and then all are steps are trained again in one go so that all get optimized as required for final output. This provides the end to end joint training.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for integrated pipeline for generation of virtual models for apparel catalogue and virtual try-ons for apparels, the method comprising:
receiving (202), via one or more hardware processors, a source image of a subject;
learning (204), a subject representation from the source image, by a Machine Learning (ML) model executed by the one or more hardware processors, wherein the subject representation comprising 1) a source pose map comprising a plurality of pose key points of the subject and 2) a partial human parse comprising minimal image segments from among a plurality of image segments that provide information about palm and fingers, bottom body parts, face, and hair of the subject;
learning (206) a target semantic image, by a first Generative Adversarial Networks (GAN) based model executed by the one or more hardware processors using i) the partial human parse, ii) a target clothing item dynamically selected from among a plurality of clothing images, and iii) a pose map dynamically selected from one of a source pose map , and a target pose map from among a plurality of target pose maps available in a catalog dataset, wherein a learnt target sematic image represents the target clothing item aligned to the partial source human parse with a pose defined by the dynamically selected pose map,
wherein flexibility to dynamically select the pose map during learning of the target semantic image enables creating variations in a pose of the target semantic image, and
wherein the first GAN model is trained using adversarial loss function combined with a Focal Tversky loss function, wherein the Focal Tversky loss function optimizes learning of the selected pose map having odd and complex poses with occlusions for which ground truth dataset is limited;
warping (208) the target clothing item to body fit the target semantic image using the subject representation and the selected pose map, using a Geometric matching module (GMM) and a spatial Transformation network executed by the one or more hardware processors;
generating (210), a final target image using the partial human parse, the target sematic image and the warped clothing item, wherein the final target image represents a virtual try-on image for the subject, and depicts pose variation in accordance with the target pose map selected during target sematic image generation, wherein the final target image is generated by a second GAN based model implemented by the one or more hardware processors, which is trained using a multi-scale version of Structural Similarity Index (MS-SSIM) loss function, a L1 loss function, a style loss, a content loss and an adversarial loss function; and
changing (212) face and hair of the final target image using a face and hair pair combination selected from face and hair variations available in the catalogue dataset, via a third GAN based model implemented by the one or more hardware processors, to create a plurality of virtual models for the apparel catalogue comprising a plurality of final target images having the pose variations derived from the plurality of target poses, clothing variations obtained from the plurality of clothing images, and ethnicity variations obtained from the face and hair variations.

2. The method as claimed in claim 1, wherein the MS-SSIM loss function weighs a SSIM computed at different scales according to sensitivity of a Human Virtual System(HVS) capturing, in the final target image, effect of image-to-observer distance.

3. A system (100) for integrated pipeline for generation of virtual models for apparel catalogue and virtual try-ons for apparels, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
receive a source image of a subject;
learn a subject representation from the source image via a Machine Learning (ML) model, wherein the subject representation comprising 1) a source pose map comprising a plurality of pose key points of the subject and 2) a partial human parse comprising minimal image segments from among the plurality of image segments that provide information about skin color, bottom body parts, face, and hair of the subject;
learn a target semantic image, via a first Generative Adversarial Networks (GAN) based model, using i) the partial human parse, ii) a target clothing item dynamically selected from among a plurality of clothing images and iii) a pose map dynamically selected from one of a) a source pose map, and b) a target pose map from among a plurality of target pose maps available in a catalog dataset, wherein a learnt target sematic image represents the target clothing item aligned to the partial source human parse with a pose defined by the dynamically selected pose map,
wherein flexibility to dynamically select the pose map during learning of the target semantic image enables creating variations in a pose of the target semantic image, and
wherein the first GAN model is trained using adversarial loss function combined with a Focal Tversky loss function, wherein the Focal Tversky loss function optimizes learning of the selected pose map having odd and complex poses with occlusions for which ground truth dataset is limited;
warp the target clothing item to body fit the target semantic image using the subject representation and the selected pose map, using a Geometric matching module (GMM) and a spatial Transformation network;
generate a final target image using the partial human parse, the target sematic image and the warped clothing item, wherein the final target image represents a virtual try-on image for the subject, and depicts pose variation in accordance with the target pose map selected during target sematic image generation, wherein the final target image is generated by a second GAN based model, and trained using a multi-scale version of Structural Similarity Index (MS-SSIM) loss function, a L1 loss function, a style loss, a content loss and an adversarial loss function; and
changing face and hair of the final target image using a face and hair pair combination selected from face and hair variations available in the catalogue dataset, via a third GAN based model, to create a plurality of virtual models, for the apparel catalogue comprising a plurality of final target images having the pose variations derived from the plurality of target poses, clothing variations obtained from the plurality of clothing images, and ethnicity variations obtained from the face and hair variations.

4. The system as claimed in claim 1, wherein the MS-SSIM loss function weighs a SSIM computed at different scales according to sensitivity of a Human Virtual System (HVS) capturing, in the final target image, effect of image-to-observer distance.

5. One or more non-transitory machine-readable information storage mediums comprising one or more instructions, which when executed by one or more hardware processors causes:
receiving a source image of a subject;
learning a subject representation from the source image, by a Machine Learning (ML) model executed by the one or more hardware processors, wherein the subject representation comprising 1) a source pose map comprising a plurality of pose key points of the subject and 2) a partial human parse comprising minimal image segments from among a plurality of image segments that provide information about palm and fingers, bottom body parts, face, and hair of the subject;
learning a target semantic image, by a first Generative Adversarial Networks (GAN) based model executed by the one or more hardware processors using i) the partial human parse, ii) a target clothing item dynamically selected from among a plurality of clothing images, and iii) a pose map dynamically selected from one of a source pose map , and a target pose map from among a plurality of target pose maps available in a catalog dataset, wherein a learnt target sematic image represents the target clothing item aligned to the partial source human parse with a pose defined by the dynamically selected pose map,
wherein flexibility to dynamically select the pose map during learning of the target semantic image enables creating variations in a pose of the target semantic image, and
wherein the first GAN model is trained using adversarial loss function combined with a Focal Tversky loss function, wherein the Focal Tversky loss function optimizes learning of the selected pose map having odd and complex poses with occlusions for which ground truth dataset is limited;
warping the target clothing item to body fit the target semantic image using the subject representation and the selected pose map, using a Geometric matching module (GMM) and a spatial Transformation network executed by the one or more hardware processors;
generating a final target image using the partial human parse, the target sematic image and the warped clothing item, wherein the final target image represents a virtual try-on image for the subject, and depicts pose variation in accordance with the target pose map selected during target sematic image generation, wherein the final target image is generated by a second GAN based model implemented by the one or more hardware processors, which is trained using a multi-scale version of Structural Similarity Index (MS-SSIM) loss function, a L1 loss function, a style loss, a content loss and an adversarial loss function; and
changing face and hair of the final target image using a face and hair pair combination selected from face and hair variations available in the catalogue dataset, via a third GAN based model implemented by the one or more hardware processors, to create a plurality of virtual models for an apparel catalogue comprising a plurality of final target images having the pose variations derived from the plurality of target poses, clothing variations obtained from the plurality of clothing images, and ethnicity variations obtained from the face and hair variations.

6. The one or more non-transitory machine-readable information storage mediums as claimed in claim 5, wherein the MS-SSIM loss function weighs a SSIM computed at different scales according to sensitivity of a Human Virtual System (HVS) capturing, in the final target image, effect of image-to-observer distance.
